# EUROPEAN PATENT SPECIFICATION

(11) **EP 2 998 864 B1**
(45) Date of publication and mention of the grant of the patent: **12.12.2018**
(21) Application number: 14185007.3
(22) Date of filing: 16.09.2014
(51) Int. Cl.: G06F 9/50

(54) **Method, device and system for deciding on a distribution path of a task**
Verfahren, Vorrichtung und System zur Festlegung eines Verteilungswegs einer Aufgabe
Procédé, dispositif et système pour décider d'un chemin de distribution d'une tâche

(43) Date of publication of application: 23.03.2016
(73) Proprietor: Hybridserver Tec IP GmbH, 6052 Hergiswil (CH)
(72) Inventor: Dürkop, Hendrik, 22397 Hamburg (DE); Zielinski, Tobias, 22391 Hamburg (DE); Aslan, Halis, 20535 Hamburg (DE); Saremi, Farbod, 22399 Hamburg (DE)
(74) Representative: Seemann & Partner Patentanwälte mbB

(56) References cited:
- US-A1- 2013 160 016

## Description

### Field of the Invention

The present invention relates to a method for deciding on a distribution path of a task in a device that comprises one or more busses and a plurality of processing elements. Further, the present invention relates to a device and a system that are configured to decide on a distribution path.

### Background of the Invention

Nowadays, large data amounts become available through the rapidly developing communication and computing techniques. Whereas highly specialized processing elements have been developed that are adapted to efficiently execute different kinds of processing tasks, many resources are wasted because the tasks are inefficiently transported from a control element to a suitable processing element.

Some of known hardware/software solutions might provide improvements into one direction or another. However, they still do not improve any or at least most of the above- listed criteria. Therefore, there is still a need for an improved hardware or software solution for optimizing the processing of tasks on a number of processing elements.

US 2013/160016 A1 discloses a system and a method for allocating compute kernels between different types of processors, namely a CPU and a GPU. While the central processing unit (CPU) is the main unit, the graphics processing units (GPUs) are designed to be particularly suitable for graphics processing operations. It is frequently known, for example from Open GL, to split applications in that parts of the code are executed on the CPU and others on the GPU. However, the determination of this split is not trivial since the CPU and GPU units spam a broad spectrum of performance characteristics. There are many different types of CPUs und GPUs available on the market, which can be mixed and matched in a given system. The prior art reference teaches to use profiles characterizing kernels and processors (CPUs and GPUs) in order to determine an optimal allocation of the kernels to the processors. A kernel profile is compared to the processor profiles of a plurality of processors in the heterogeneous computer system, wherein at least one processor from the plurality of processors is afterwards selected based upon this comparison.

### Summary of the Invention

It is therefore an object of the present invention to provide a method, a device and a system that overcome some of the above-mentioned problems of the prior art.

Particularly, the advantages of the present invention are achieved by appended independent claims. Further aspects, embodiments and features of the present invention are specified in the appended dependent claims and in the description and also make a contribution to achieving said advantages.

According to an embodiment of the present invention, the method for deciding on a distribution path of a task in a device that comprises one or more busses and a plurality of processing elements, wherein for the at least one processing element, at least two paths for communicating with this processing element are available, comprises the steps of:
- identifying one or more processing elements from the plurality of processing elements that are capable of processing the task,
- identifying at least two paths for communicating with the one or more identified processing elements,
- predicting a cycle length for one or more of the identified processing elements and the identified at least two paths,
- selecting a preferred processing element from the identified processing elements and selecting a preferred path from the identified at least two paths, wherein the selection of the preferred processing element and the selection of the preferred paths is based on the prediction of the cycle length.

The present invention is based on the idea that based on a cycle length prediction that particular path and processing element that lead to the fastest processing of the task are chosen. The method of the present invention thus avoids wasting of resources that is caused by using unnecessary long paths for communicating with a processing element or by using a processing element that is not ideally suited for processing a given task.

The present invention is implemented with bus systems where for at least one processing element at least two paths for communicating with this processing element are available. In particular, the invention is advantageous if the transfer times for the at least two paths are different.

Some elements of the bus can act both as control elements and as processing elements. For example, a first control element can send a task to a second control element, which then acts as processing element.

According to an example of the present invention, access to the one or more busses is managed using a time division multiple access (TDMA) scheme. In a simple TDMA scheme, the active element of the bus is changed in fixed time increments. In this way, it is determined in advance, when which element will be allowed to access the bus. In the context of the present invention, this has the advantage that precise predictions about future availability of the one or more busses can be made.

According to another example of the present invention, access to the one or more busses is managed using a token passing scheme. In particular, an access token can be passed from a first element of the bus to the next element, when the first element is finished accessing the bus. Token passing schemes can be more efficient than simple TDMA schemes because idle time slots are avoided. On the other hand, the prediction of future bus availability can be more complicated. To this end, the control element can keep a table of current and future tasks to be executed on the bus. This allows an accurate prediction of future bus availability and choosing processing elements and transfer paths such that the one or more busses are used most efficiently.

According to another example of the present invention, the one or more busses are set up as token rings, i.e. the neighbours of an element are the physical neighbours of this element.

The present invention can also be used with other protocols for controlling access to the one or more busses. These can include static and dynamic access control schemes, e.g. scheduling methods and random access methods.

The present invention can be used with different kinds of topologies, in particular linear busses, ring busses, and branch topologies, star networks and tree topologies. In some embodiments, the method of the present invention can even be used in conjunction with fully connected meshes.

A task can comprise one or more instructions and data.

Identifying one or more processing elements that are capable of processing the task can be performed for example by using a lookup table which for each processing element provides the information, which processing capabilities it has. For example, for a given processing element that comprises a graphical processing unit (GPU) the table could comprise the information that this processing element can process certain tasks relating to certain graphical processing instructions.

Identifying one or more paths for communicating with the one or more identified processing elements can be implemented by looking up in a table through which busses a given processing element is connected with the control element that is requesting processing of this task. Even if there is only one bus available to communicate with the given processing element, there might be two directions available through which the control element can communicate with this processing element. In this case, there might be e.g. two paths available for communicating with the processing element in clockwise or counter-clockwise direction on a ring bus. Furthermore, a bus might comprise branches, which also result in a plurality of paths that are available for a communication with a given processing element.

Predicting a cycle length for one or more of the identified processing elements and the identified paths may comprise using two lookup tables: a first lookup table which stores path lengths for different paths between control elements and processing elements and a second lookup table which stores information about the expected processing time for different tasks and different processing elements. For example, the second lookup table could comprise the information that a certain graphical processing instruction requires 10 clock cycles to process on a first processing element, but only eight clock cycles the process on a second processing element.

In other examples of the invention, there is only one lookup table, which comprises information about the expected processing times for different kinds of tasks on different processing elements. For example, such a table can comprise expected processing times for a certain instruction on a certain processing element, with further information about how the processing time varies depending on the amount of input data for this instruction.

In other words, the cycle length can be predicted based on one or more of the following information: knowledge, how the bus is structured; in which state or position the bus and or the processing elements are at the moment; information about which tasks with which amount of data need to be processed; information, whether a given task comprises more datasets than can be stored in one vector, such that the task should ideally be distributed across the available processing elements, i.e. SIMD across individual processing elements and processing steps.

In some cases the predictions may be based on exact calculations. In other cases, the predictions may be based on heuristics and only be a rough estimation of the true path time or processing time.

According to an embodiment of the present invention, the cycle length for an identified processing element and an identified path is predicted based on a predicted forward transfer time for transferring an instruction and input data to the processing element on the identified path, a predicted return transfer time for transferring output data from the processing element on the identified path, and/or a predicted processing time for processing the task on the identified processing element.

The predicted forward transfer time and the predicted return transfer time may comprise the time for the entire input data to arrive at the processing element.

According to an embodiment of the present invention, the predicted cycle length is the sum of the predicted forward transfer time, the predicted return transfer time and the predicted processing time.

This embodiment has the advantage that the predicted cycle length is particularly quick and efficient to compute. In some embodiments, the sum of the predicted forward transfer time, the predicted return transfer time and the predicted processing time may be a weighted sum. This can be particularly useful if only some of the predicted times can be exactly calculated. In this case a higher weighting may be given to the time which is exactly calculated.

According to an embodiment of the present invention, predicting the cycle length is based on at least one of the current availability and/or utilization of the one or more busses, and the current availability and/or utilization of the one or more identified processing elements.

Considering the current availability and/or utilization of the busses and the processing elements allows for an even more precise prediction of path time and processing time:

According to an embodiment of the present invention, the method further comprises:
beginning processing of the task on the selected processing element,
updating the predicted cycle length of the task to obtain a predicted remaining cycle length of the task,
cancelling the processing of the task on the selected processing element if it is determined that the predicted remaining cycle length is higher than a predicted cycle length for processing the task in a different processing element, and
assigning the task to said different processing element.

Updating the predicted cycle length of the task to obtain a predicted remaining cycle length of the task has the advantage that further information, that become available only after the processing of the task has started, can be considered. For example in cases where information becomes available that a processing element that has already started processing a certain tasks is slowed down and expectedly, it may be decided to cancel processing of the task on this processing element and defer the task to a different processing element.

This embodiment of the invention has the further advantage that the processing of the task on a given processing element can be cancelled if the processing takes much longer than predicted, which may be an indication that the processing on this processing element has been falsely predicted.

In other embodiments of the invention, the processing of a task on a selected processing element can be cancelled if the control element determines that this processing element is needed in order to process a task with higher priority. This can be particularly relevant in a case of predicted likely future tasks.

In a further preferred embodiment of the invention, the information that the processing of tasks on a given processing element has taken a longer time than predicted is stored in a table and considered when predicting processing elements for similar tasks. In particular, if the processing of a certain task has failed on a given processing element, this information can be stored in a table. In extreme cases, were the processing of a certain kind of the task has repeatedly failed on a given processing element it may be decided that similar tasks should not be processed on this processing element, even if the processing element indicates that it is available.

According to an embodiment of the present invention, the method further comprises:
determining a threshold time for the processing of the task, beginning processing of the task on the selected processing element,
checking whether the actual processing time for the task is higher than the threshold time,
cancelling the processing of the task if the actual processing time is higher than the threshold time,
assigning the task to a different processing element.

This embodiment provides a simple way of deciding when execution of a certain task should be cancelled because it is taking significantly longer than expected, which is likely due to a processing failure.

According to a further embodiment of the invention, there is provided a device, comprising
- one or more busses,
- one or more control elements, and
- a plurality of processing elements,
wherein at least one of the control elements is adapted to decide on a distribution path for a task based on:
- identifying one or more processing elements from the plurality of processing elements that are capable of processing the task,
- identifying at least two paths for communicating with the one or more identified processing elements,
- predicting a cycle length for one or more of the identified processing elements and the identified paths,
- selecting a preferred processing element from the identified processing elements and selecting a preferred path from the identified paths, wherein the selection of the preferred processing element and the selection of the preferred paths is based on the prediction of the cycle length.

According to an embodiment of the present invention, at least one of the control elements is adapted to predict the cycle length based on a predicted forward transfer time for transferring an instruction and input data to the processing element,
a predicted return transfer time for transferring output data from the processing element, and/or
a predicted processing time for processing the task in a processing element.

According to an embodiment of the present invention, at least one of the control elements is adapted to carry out the steps:
beginning execution of the task on the selected processing element, updating the predicted cycle length of the task to obtain a predicted remaining cycle length of the task,
cancelling the processing of the task on the selected processing element if it is determined that the predicted remaining cycle length is higher than a predicted cycle length for processing the task in a different processing element, and
re-assigning the task to said different processing element.

According to an embodiment of the present invention, the device further comprises a busy table comprising information about the current availability and/or utilization of the plurality of processing elements, wherein the control element is adapted to regularly update the information in the busy table.

According to an embodiment of the present invention, the one or more busses comprise one or more rings.

According to a further embodiment of the present invention, the one or more busses comprise a first set of busses for transporting instructions and a second set of busses for transporting data. This has the advantage that the first of busses can be optimized for low-latency transmission of instructions and the second set of busses can be optimized for high bandwidth transmission of potentially large amounts of data. In particular, the first and second set of busses can operate at different frequencies, e.g. the first set of busses can operate at a higher frequency whereas the second set of busses operates at a lower frequency, but provides a higher transmission capacity per cycle.

According to further embodiment of the present invention, the one or more busses comprise two rings that are unidirectional and oriented in opposite directions.

In this way, the present invention can be executed in a particularly efficient manner because a lot of data transport time can be saved if the more suitable of the two differently oriented ring busses is chosen.

According to an embodiment of the present invention, the one or more busses comprise an Element Interconnect Bus.

According to a further embodiment of the present invention, at least one of the plurality of processing elements is connected to the one or more busses and additionally comprises a direct connection to the primary processing element.

According to an embodiment of the present invention, the device further comprises a prediction module that is configured to predict future tasks based on previously processed tasks.

Predicting future tasks has the advantage that data required for a future task can be preloaded already before the task is actually executed. For example, if it is detected that previous tasks involved loading data1.jpg, data2.jpg, and data3.jpg, the prediction module could predict that a future task likely will involve loading a possibly existent data4.jpg and thus preload data4.jpg already before the corresponding task is started. In a preferred embodiment, such preloading of data is performed only if the system is under low load, for example if the current load of the control element is lower than a predetermined threshold value.

According to a further embodiment of the present invention, the device is adapted to cancel one or more predicted future tasks in favour of executing current tasks if one or more new tasks arrive after beginning execution of one or more predicted future task. For example, it may turn out that the prediction was not accurate and the new tasks should be executed instead of the predicted future tasks.

According to a further embodiment of the present invention, there is provided a server system, comprising a device according to one of the above-described embodiments.

In this way, also a server system is preferably configured such that it provides all of the positive effects listed in the present application. Additionally, introduction and/or use of existing data center infrastructures/components/modules/elements is enabled at the same time.

According to an example of the present invention, there is provided an ASIC or FPGA which is adapted to carry out the method as outlined above and explained in more detail below.

According to a further aspect of the present invention, the one or more busses, the one or more control elements, and at least some of the plurality of processing elements are located inside the same chip housing. This has the advantage that a particularly high bandwidth can be achieved for communicating with the components that are located within the same housing. Furthermore, this set-up yields cost savings in mass production.

According to another example of the present invention, there is provided a computer readable medium comprising a program code, which, when executed by a computing device, causes the computing device to carry out the method as outlined above and explained in more detail below.

### Brief Description of the Drawings

Further advantages and preferred embodiments are included in the dependent claims and will be better understood from the description below of a preferred embodiment, with reference to the accompanying drawings. In the following drawings:
Fig. 1 shows a schematic representation of a bus system with ring structure
Fig. 2 shows a schematic representation of a further bus system with ring structure;
Fig. 3 shows a schematic representation of a bus system with ring structure, where each of the rings is not connected with each of the elements;
Fig. 4 shows a schematic representation of a further bus system, with indicated pointers to current and future active elements;
Fig. 5 shows a schematic representation of a further bus system;
Fig. 6 shows a schematic representation of a bus system with TDMA structure that operates bi-directional;
Fig. 7 shows a schematic representation of a bus system with TDMA structure with branches and that operates bi-directional;
Fig. 7a shows a schematic representation of the bus system of Fig. 7, with a global token in a primary branch;
Fig. 7b shows a schematic representation of the bus system of Fig. 7, with a global token in a secondary branch and optionally a local token in a different secondary branch; and
Fig. 8 shows a schematic representation of a bus system with TDMA structure that operates bi-directional in which not all but some elements share the same busses.

### Detailed Description of the Invention

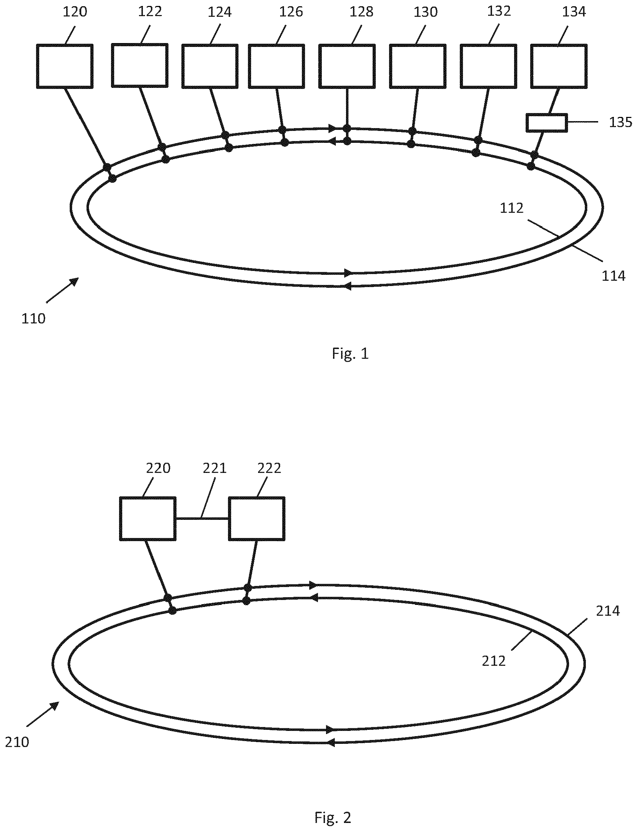

Fig. 1 shows a schematic representation of a bus system 110 with a ring topology. The bus system 110 comprises a first ring bus 112 which is adapted to transport instructions and data in a counter-clockwise direction and a second bus 114 which is adapted to transport instructions and data in a clockwise direction. Attached to the busses 112 and 114 is a processing core 120, which acts as a control element. Furthermore, there is a plurality of elements of various functionality 122-134 connected to the busses 112, 114. The elements 122-134 comprise a random access memory (RAM) 122, a flash memory 124, a mass storage controller 126, a network interface controller 128, an 12C bus 130, a Peripheral Component Interconnect Express bus (PCie) 132 and further miscellaneous devices 134.

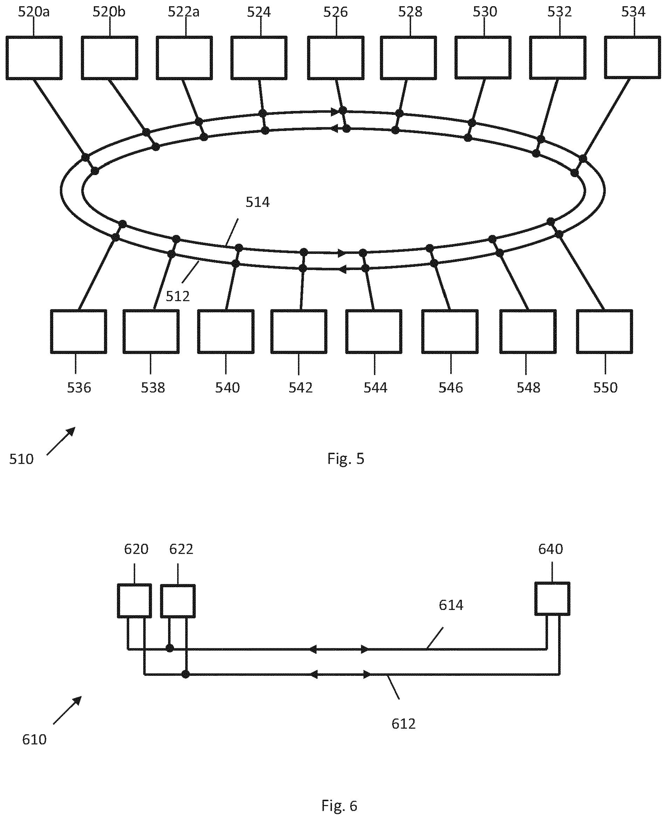

The ring busses 112, 114 are set up as direct connections between the connected elements, operated in a time-shifted manner. For the system of Fig. 1, the elements 120-134 are connected to both busses 112, 114. There are, however, no direct connections between the busses. Similarly, the systems shown in Fig. 2 and Fig. 5 do not comprise any direct connections between the busses. In other embodiments of the invention, the busses can comprise direct connections.

Successively, the connected elements are allowed to write, i.e., the active status is passed from one element to the next and read or write operations can only be performed by the element that is active at a given point in time. In some embodiments, more than one task can be transported in one clock cycle. Also, more than one dataset can be attached to one task (SIMD). Depending on the number of bus rings, the number of connected elements and the starting position and direction of the pointer, it can happen that more than one ring addresses the same element at one point in time. For this case, a FIFO buffer can be provided that absorbs the additional instructions and data. In Fig.1, the FIFO buffer 135 is shown only for the other miscellaneous element 134, but in a similar way FIFO buffers can be provided for all processing elements.

Figure 2 shows a schematic representation of a non-exclusive bus system 210 comprising ring busses 212, 214 with a processing core 220 and a RAM 222 connected to them. Furthermore, the processing core 220 and the RAM 222 are connected through a direct connection 221. Further elements can be connected to the ring busses 212, 214, but are not shown in Fig. 2.

It should be noted that in other embodiments of the invention, the ring busses shown in Figures 1 and 2 can also be implemented with access protocols where the active time slot is passed from a first element to the next element when the first element is finished with accessing the bus. This can be implement e.g. as a token ring access scheme, where an element passes the token to the next element when it has finished accessing the bus.

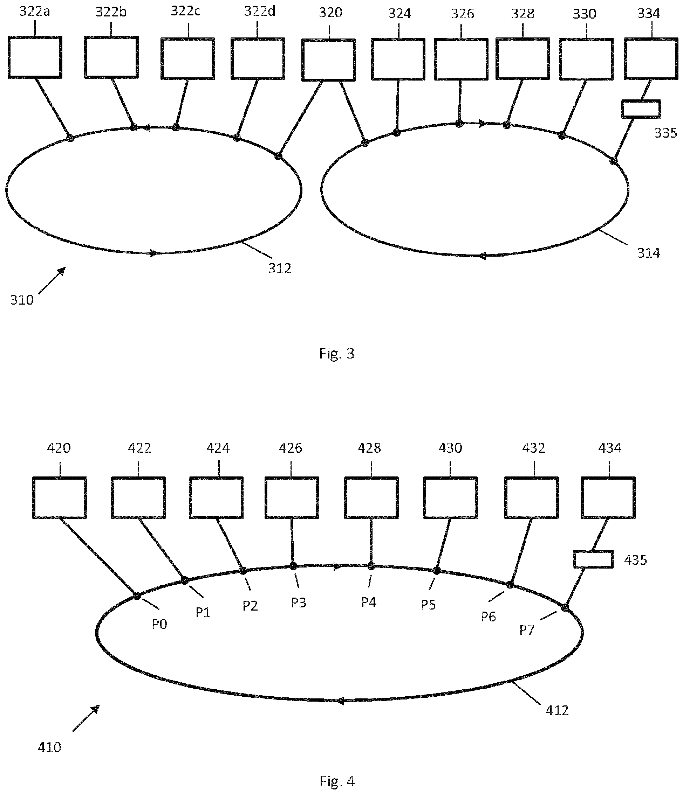

Figure 3 shows a schematic representation of a bus system comprising two rings 312, 314, where neither the first ring 312 nor the second ring 314 is connected with all of the processing elements 320 to 334. In this example not forming part of the invention, only the processing core 320 is connected to both the first ring 312 and the second ring 314. In other examples, the one or more elements that are connected to both the first ring 312 and the second ring 314 can be a RAM or a controller that connects to elements outside the chip. Other devices 334, which may be located outside the chip, can be connected to the two rings 312, 314 via a FIFO buffer 335.

Figure 4 shows a schematic representation of a ring bus 412, wherein the pointer to the current active element is indicated as PO and pointers to the next active elements are indicated as P1 to P7. In this example not forming part of the invention, a processing core 420, which acts as a control element, a RAM 422, a Flash 424, a storage 426, an NIC 428, an 12C bus 430, a PCie 432 and other elements 434 are connected to the ring bus 412, wherein the other elements 434 are connected to the ring bus 412 via a FIFO buffer 435. The ring bus 412 is configured to transport data in a clock-wise direction and also the pointer passes through the ring in a clockwise direction. In the shown example, the elements are separated by the distance of one clock cycle. Other examples may provide that the pointer position passes through the ring with different time increments which may or may not be equal in length. The forwarding of the pointer can be decided e.g. based on static priorities that are assigned to the different elements.

Figure 5 shows a schematic representation of a further bus system 510 in accordance with the present invention.

The operation of the invention shall be illustrated with the following example: Assuming that primary processing element 520a acts as a control element and sends a task that can be processed on one of the secondary processing elements 536-550: According to a prior art processing method, based on a previous successful result stored in one of the lookup tables, the task would be sent to secondary processing element 540 using first ring 512, which requires 14 clock cycles. After processing in the secondary processing element 540, which requires 4 clock cycles, the output data would be returned to primary processing element 520a on the first ring 512, which takes another 3 clock cycles. It takes a further 13 clock cycles before the active slot is returned to the primary processing element 520a. This yields a total cycle time of 14 + 4 + 13 + 3 = 34 clock cycles. According to the present invention, ideally it would be determined that the predicted cycle time is only 3 + 4 + 0 + 3 = 10 clock cycles if the task is sent to the secondary processing element 540 via the second ring 514, and returned to the primary processing element 520a via the first ring 512 without any bus waiting time because by set-up the ring 514 may have an exactly matching offset to ring 512. In this example, the method according to the present invention leads to a reduction of the cycle time to less than a third of the cycle time according to the prior art approach.

The n connected elements correspond to n different pointer positions.

Figure 6 shows a schematic representation of a further bus system 610 in accordance with the present invention. The bus system 610 is set-up with two bi-directional busses 612, 614 with a linear topology and a time division multiple access scheme. Fig. 3 shows three elements 620, 622, 640 that are connected to both linear busses 612, 614. In general, there can be a number of n such elements connected to both busses. Several of these elements can act as control elements, with the other elements acting as processing elements, controlled by the control elements. In addition to the control and processing elements other elements e.g. a RAM controller could be connected to the busses 612, 614, too.

Alternatively, the bus system 610 can also be set up using a token passing scheme where the token is passed from one station to the next, wherein the "next" station is defined based on the addresses of the bus interfaces of the elements connected to the bus.

In a further embodiment of the invention, the pointer can be pushed or pulled by a connected control element to receive or send data to or from any other connected element.

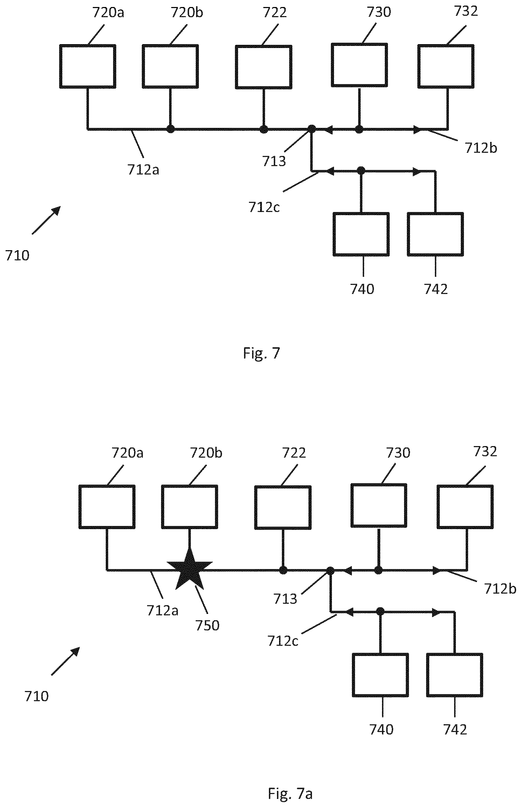

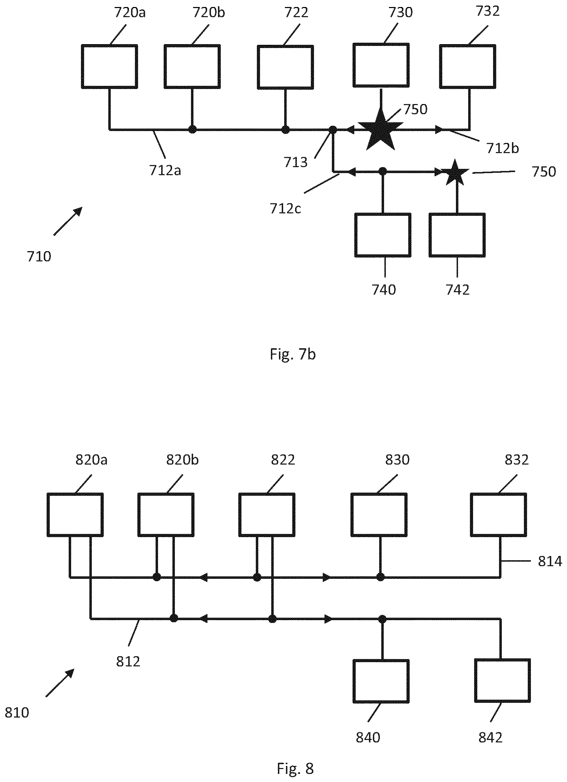

Figure 7 shows a schematic representation of a non-exclusive bus system 710 not representing an embodiment of the invention, that comprises three linear parts 712a, 712b, 712c that are connected through a branch 713. Connected to the bus system 710 are: two control elements 720a, 720b and a RAM 722 that are connected to the first linear part 712a, two processing elements 730, 732 that are connected to the second linear part 712b and two processing elements 740, 742 that are connected to the third linear part 712c of the bus system 710. In addition to second and third linear part 712b, 712c shown in Fig. 7, there can be any number of additional linear parts which are also connected to the first linear part 712a. These additional linear parts can comprise the same number of connected elements.

For example the RAM component 722 has a total of three physical neighbours: control element 720b, processing element 730 of the second part 712b and processing element 740 of the third part 712c. Therefore, access to this bus system 710 should be managed with a token passing scheme where the neighbour relations are defined based on the addresses of the connected elements. It should be noted that linear parts 712b and 712c can be active at the same time. Temporary or second-level tokens are used to assign the active slot within one linear part. Knowledge about the current state and the predicted future availability of the linear parts can be used by the cycle prediction method and by the decision which processing elements the tasks are assigned to.

In an example, to allow for the use of more than one token per bus 712a,b,c there is a primary branch part and a plurality of secondary branch parts. This is illustrated in Figs. 7a and 7b, where the first linear part 712a forms a primary branch and second and third linear part 712b ,712c forma secondary branch part.

To avoid conflicts there can only be one global token 750 which always has traversing priorities. The global token 750 is indicated in Figs. 7a and 7b as a big star, the local token 752 as a small star. If the global token 750 is present on the primary branch part, as shown in Fig. 7a, there cannot be any local tokens on any of the secondary branch parts. However if the global token 750 is present on one of the secondary branch parts, as shown in Fig. 7b, it is possible to allow for local tokens 752 in all or some of the other secondary branch parts which cannot leave their individual secondary branch parts.

Figure 8 shows a schematic representation of a non-exclusive bus system 810 comprising two bi-directional busses 812, 814. A first control element 820a, a second control element 820b and a RAM 822 are connected to both the first bus 812 and the second bus 814. A number of n processing elements 830, 832 are connected only to the second bus 814 and a number of n processing elements 840, 842 are connected only to the first bus 812. This set-up can be repeated n times such that there is a total of m*n processing elements connected to the bus system. The set-up shown in Fig. 8 has the advantage that for example the communication between the control elements 820a, 820b and RAM 822 can occur both through the first bus 812 and the second bus 814. This enables a total bandwidth that is twice as high compared to the bandwidth for communicating with the processing elements 830, 832, 840, 842, which may be accessed less often than the RAM. In this way, the architecture is adapted to the typical load scenarios. Another benefit is that communication with more than one SPE can occur simultaneously.

Access to the busses 812, 814 can be implemented with a simple time division multiple access scheme. Alternatively, for example a token passing scheme or a combination of the two can be used.

With regard to the embodiments explained above, it has to be noted that said embodiments may be combined with each other. Furthermore, it is understood, that the bus systems shown in the drawings can comprise further elements and further busses that are not shown in the drawings. Furthermore, different busses that are connected via a bridge or share at least one element could use different access schemes.

## Claims

1. Method for deciding on a distribution path of a task in a device that comprises one or more busses (112, 114, 212, 214, 312, 314, 412, 512, 514, 612, 614, 712a, 712b, 712c, 812, 814) and a plurality of processing elements (122-134, 222, 322-334, 422-434, 522-550, 620-640, 720a-742, 822-842), wherein for the at least one processing element (122-134, 222, 322-334, 422-434, 522-550, 620-640, 720a-742, 822-842), at least two paths for communicating with this processing element (122-134, 222, 322-334, 422-434, 522-550, 620-640, 720a-742, 822-842) are available, the method comprising the steps:
- identifying one or more processing elements (122-134, 222, 322-334, 422-434, 522-550, 620-640, 720a-742, 822-842) from the plurality of processing elements that are capable of processing the task, **characterized by**
- identifying at least two paths for communicating with the one or more identified processing elements (122-134, 222, 322-334, 422-434, 522-550, 620-640, 720a-742, 822-842),
- predicting a cycle length for one or more of the identified processing elements (122-134, 222, 322-334, 422-434, 522-550, 620-640, 720a-742, 822-842) and the identified at least two paths,
- selecting a preferred processing element from the identified processing elements (122-134, 222, 322-334, 422-434, 522-550, 620-640, 720a-742, 822-842) and selecting a preferred path from the identified at least two paths, wherein the selection of the preferred processing element (122-134, 222, 322-334, 422-434, 522-550, 620-640, 720a-742, 822-842) and the selection of the preferred paths is based on the prediction of the cycle length.

2. The method of claim 1, wherein the cycle length for an identified processing element (122-134, 222, 322-334, 422-434, 522-550, 620-640, 720a-742, 822-842) and an identified path is predicted based on
- a predicted forward transfer time for transferring an instruction and input data to the identified processing element (122-134, 222, 322-334, 422-434, 522-550, 620-640, 720a-742, 822-842) on the identified path,
- a predicted return transfer time for transferring output data from the identified processing element (122-134, 222, 322-334, 422-434, 522-550, 620-640, 720a-742, 822-842) on the identified path, and/or
- a predicted processing time for processing the task on the identified processing element (122-134, 222, 322-334, 422-434, 522-550, 620-640, 720a-742, 822-842).

3. The method of claim 2, wherein the predicted cycle length is the sum of the predicted forward transfer time, the predicted return transfer time and the predicted processing time.

4. The method of one of the previous claims, wherein predicting the cycle length is based on at least one of
- the current availability and/or utilization of the one or more busses (112, 114, 212, 214, 312, 314, 412, 512, 514, 612, 614, 712a, 712b, 712c, 812, 814), and
- the current availability and/or utilization of the one or more identified processing elements (122-134, 222, 322-334, 422-434, 522-550, 620-640, 720a-742, 822-842).

5. The method of one of the previous claims, wherein the method further comprises:
- beginning processing of the task on the selected processing element (122-134, 222, 322-334, 422-434, 522-550, 620-640, 720a-742, 822-842),
- updating the predicted cycle length of the task to obtain a predicted remaining cycle length of the task,
- cancelling the processing of the task on the selected processing element (122-134, 222, 322-334, 422-434, 522-550, 620-640, 720a-742, 822-842) if it is determined that the predicted remaining cycle length is higher than a predicted cycle length for processing the task in a different processing element (122-134, 222, 322-334, 422-434, 522-550, 620-640, 720a-742, 822-842), and
- assigning the task to said different processing element (122-134, 222, 322-334, 422-434, 522-550, 620-640, 720a-742, 822-842).

6. The method of one of the previous claims, wherein the method further comprises:
- determining a threshold time for the processing of the task,
- beginning processing of the task on the selected processing element (122-134, 222, 322-334, 422-434, 522-550, 620-640, 720a-742, 822-842),
- checking whether the actual processing time for the task is higher than the threshold time,
- cancelling the processing of the task if the actual processing time is higher than the threshold time,
- assigning the task to a different processing element (122-134, 222, 322-334, 422-434, 522-550, 620-640, 720a-742, 822-842).

7. A device, comprising
- one or more busses (112, 114, 212, 214, 312, 314, 412, 512, 514, 612, 614, 712a, 712b, 712c, 812, 814),
- one or more control elements (120, 220, 320, 420, 520a, 520b, 620, 720a, 720b), and
- a plurality of processing elements (122-134, 222, 322-334, 422-434, 522-550, 620-640, 720a-742, 822-842), wherein for the at least one processing element(122-134, 222, 322-334, 422-434, 522-550, 620-640, 720a-742, 822-842), at least two paths for communicating with this processing element (122-134, 222, 322-334, 422-434, 522-550, 620-640, 720a-742, 822-842) are available and wherein at least one of the control elements (120, 220, 320, 420, 520a, 520b, 620, 720a, 720b) is adapted to decide on a distribution path for a task based on:
- identifying one or more processing elements (122-134, 222, 322-334, 422-434, 522-550, 620-640, 720a-742, 822-842) from the plurality of processing elements that are capable of processing the task, **characterized by**
- identifying at least two paths for communicating with the one or more identified processing elements (122-134, 222, 322-334, 422-434, 522-550, 620-640, 720a-742, 822-842),
- predicting a cycle length for one or more of the identified processing elements (122-134, 222, 322-334, 422-434, 522-550, 620-640, 720a-742, 822-842) and the identified at least two paths,
- selecting a preferred processing element (122-134, 222, 322-334, 422-434, 522-550, 620-640, 720a-742, 822-842) from the identified processing elements and selecting a preferred path from the identified at least two paths, wherein the selection of the preferred processing element (122-134, 222, 322-334, 422-434, 522-550, 620-640, 720a-742, 822-842) and the selection of the preferred paths is based on the prediction of the cycle length.

8. The device of claim 7, wherein at least one of the control elements (120, 220, 320, 420, 520a, 520b, 620, 720a, 720b) is adapted to predict the cycle length based on
- a predicted forward transfer time for transferring an instruction and input data to the processing element (122-134, 222, 322-334, 422-434, 522-550, 620-640, 720a-742, 822-842),
- a predicted return transfer time for transferring output data from the processing element (122-134, 222, 322-334, 422-434, 522-550, 620-640, 720a-742, 822-842), and/or
- a predicted processing time for processing the task in a processing element (122-134, 222, 322-334, 422-434, 522-550, 620-640, 720a-742, 822-842).

9. The device of claim 7 or 8, wherein at least one of the control elements (120, 220, 320, 420, 520a, 520b, 620, 720a, 720b) is adapted to carry out the steps:
- beginning execution of the task on the selected processing element (122-134, 222, 322-334, 422-434, 522-550, 620-640, 720a-742, 822-842),
- updating the predicted cycle length of the task to obtain a predicted remaining cycle length of the task,
- cancelling the processing of the task on the selected processing element (122-134, 222, 322-334, 422-434, 522-550, 620-640, 720a-742, 822-842) if it is determined that the predicted remaining cycle length is higher than a predicted cycle length for processing the task in a different processing element (122-134, 222, 322-334, 422-434, 522-550, 620-640, 720a-742, 822-842), and
- re-assigning the task to said different processing element (122-134, 222, 322-334, 422-434, 522-550, 620-640, 720a-742, 822-842).

10. The device of one of claims 7 to 9, wherein it further comprises one or more busy tables comprising information about the capabilities and/or current availability and/or utilization of the plurality of processing elements (122-134, 222, 322-334, 422-434, 522-550, 620-640, 720a-742, 822-842), wherein at least one of the control elements (120, 220, 320, 420, 520a, 520b, 620, 720a, 720b) is adapted to regularly update the information in the one or more busy tables.

11. The device of one of claims 7 to 10, wherein the one or more busses (112, 114, 212, 214, 312, 314, 412, 512, 514) comprise one or more rings.

12. The device of one of claims 7 to 11, wherein the one or more busses (112, 114, 212, 214, 312, 314, 412, 512, 514, 612, 614, 712a, 712b, 712c, 812, 814) comprise a first set of busses for transporting instructions and a second set of busses for transporting data.

13. The device of one of claims 7 to 12, wherein the one or more busses (112, 114, 212, 214, 312, 314) comprise two rings (112, 114, 212, 214, 312, 314) that are unidirectional and oriented in opposite directions.

14. The device of one of claims 7 to 13, wherein the one or more busses (112, 114, 212, 214, 312, 314, 412, 512, 514) comprise an Element Interconnect Bus.

15. The device of one of claims 7 to 14, wherein at least one of the plurality of elements (220, 222) is connected to the one or more busses (212, 214) and additionally comprises a direct connection (221) to at least one other element (212,214).

16. The device of one of claims 7 to 15, further comprising a prediction module that is configured to predict future tasks based on previously processed tasks.

17. The device of claim 16, wherein the device is adapted to cancel one or more predicted future tasks in favour of executing current tasks if one or more new tasks arrive after beginning execution of one or more predicted future tasks.

18. The device of one of claims 7 to 17, wherein the one or more busses (112, 114, 212, 214, 312, 314, 412, 512, 514, 612, 614, 712a, 712b, 712c, 812, 814), the one or more control elements (120, 220, 320, 420, 520a, 520b, 620, 720a, 720b), and at least some of the plurality of processing elements (122-134, 222, 322-334, 422-434, 522-550, 620-640, 720a-742, 822-842) are located inside the same chip housing.

19. Server system, comprising a device according to at least one of claims 7 to 18.

## Patentansprüche

1. Verfahren zum Entscheiden über einen Verteilungsweg einer Aufgabe in einer Vorrichtung, die einen oder mehrere Busse (112, 114, 212, 214, 312, 314, 412, 512, 514, 612, 614, 712a, 712b, 712c, 812, 814) und eine Vielzahl von Verarbeitungselementen (122 bis 134, 222, 322 bis 334, 422 bis 434, 522 bis 550, 620 bis 640, 720a bis 742, 822 bis 842) umfasst, wobei für das mindestens eine Verarbeitungselement (122 bis 134, 222, 322 bis 334, 422 bis 434, 522 bis 550, 620 bis 640, 720a bis 742, 822 bis 842) mindestens zwei Wege zur Kommunikation mit diesem Verarbeitungselement (122 bis 134, 222, 322 bis 334, 422 bis 434, 522 bis 550, 620 bis 640, 720a bis 742, 822 bis 842) verfügbar sind, wobei das Verfahren die folgenden Schritte umfasst:
- Identifizieren von einem oder mehreren Verarbeitungselementen (122 bis 134, 222, 322 bis 334, 422 bis 434, 522 bis 550, 620 bis 640, 720a bis 742, 822 bis 842) aus der Vielzahl von Verarbeitungselementen, die in der Lage sind, die Aufgabe zu verarbeiten, **gekennzeichnet durch**
- Identifizieren von mindestens zwei Wegen zur Kommunikation mit dem einen oder den mehreren identifizierten Verarbeitungselementen (122 bis 134, 222, 322 bis 334, 422 bis 434, 522 bis 550, 620 bis 640, 720a bis 742, 822 bis 842),
- Vorhersagen einer Taktlänge für eines oder mehrere von den identifizierten Verarbeitungselementen (122 bis 134, 222, 322 bis 334, 422 bis 434, 522 bis 550, 620 bis 640, 720a bis 742, 822 bis 842) und die identifizierten mindestens zwei Wege,
- Auswählen eines bevorzugten Verarbeitungselements aus den identifizierten Verarbeitungselementen (122 bis 134, 222, 322 bis 334, 422 bis 434, 522 bis 550, 620 bis 640, 720a bis 742, 822 bis 842) und Auswählen eines bevorzugten Wegs aus den identifizierten mindestens zwei Wegen, wobei die Auswahl des bevorzugten Verarbeitungselements (122 bis 134, 222, 322 bis 334, 422 bis 434, 522 bis 550, 620 bis 640, 720a bis 742, 822 bis 842) und die Auswahl der bevorzugten Wege auf der Vorhersage der Taktlänge basieren.

2. Verfahren nach Anspruch 1, wobei die Taktlänge für ein identifiziertes Verarbeitungselement (122 bis 134, 222, 322 bis 334, 422 bis 434, 522 bis 550, 620 bis 640, 720a bis 742, 822 bis 842) und einen identifizierten Weg basierend auf Folgendem vorhergesagt werden:
- einer vorhergesagten Vorwärtsübertragungszeit zum Übertragen von eines Befehls und Eingangsdaten an das identifizierte Verarbeitungselement (122 bis 134, 222, 322 bis 334, 422 bis 434, 522 bis 550, 620 bis 640, 720a bis 742, 822 bis 842) auf dem identifizierten Weg,
- einer vorhergesagten Rückübertragungszeit zum Übertragen von Ausgangsdaten von dem identifizierten Verarbeitungselement (122 bis 134, 222, 322 bis 334, 422 bis 434, 522 bis 550, 620 bis 640, 720a bis 742, 822 bis 842) auf dem identifizierten Weg und/oder
- einer vorhergesagten Verarbeitungszeit für die Verarbeitung der Aufgabe auf dem identifizierten Verarbeitungselement (122 bis 134, 222, 322 bis 334, 422 bis 434, 522 bis 550, 620 bis 640, 720a bis 742, 822 bis 842).

3. Verfahren nach Anspruch 2, wobei die vorhergesagte Taktlänge die Summe der vorhergesagten Vorwärtsübertragungszeit, der vorhergesagten Rückübertragungszeit und der vorhergesagten Verarbeitungszeit ist.

4. Verfahren nach einem der vorhergehenden Ansprüche, wobei das Vorhersagen der Taktlänge auf mindestens einem Folgenden basiert:
- der gegenwärtigen Verfügbarkeit und/oder Nutzung von dem einen oder den mehreren Bussen (112, 114, 212, 214, 312, 314, 412, 512, 514, 612, 614, 712a, 712b, 712c, 812, 814), und
- der gegenwärtigen Verfügbarkeit und/oder Nutzung von dem einen oder den mehreren identifizierten Verarbeitungselementen (122 bis 134, 222, 322 bis 334, 422 bis 434, 522 bis 550, 620 bis 640, 720a bis 742, 822 bis 842).

5. Verfahren nach einem der vorhergehenden Ansprüche, wobei das Verfahren ferner Folgendes umfasst:
- Beginnen der Verarbeitung der Aufgabe auf dem ausgewählten Verarbeitungselement (122 bis 134, 222, 322 bis 334, 422 bis 434, 522 bis 550, 620 bis 640, 720a bis 742, 822 bis 842),
- Aktualisieren der vorhergesagten Taktlänge der Aufgabe, um eine vorhergesagte verbleibende Taktlänge der Aufgabe zu erhalten,
- Abbrechen der Verarbeitung der Aufgabe auf dem ausgewählten Verarbeitungselement (122 bis 134, 222, 322 bis 334, 422 bis 434, 522 bis 550, 620 bis 640, 720a bis 742, 822 bis 842), wenn bestimmt wird, dass die vorhergesagte verbleibende Taktlänge länger als eine vorhergesagte Taktlänge für die Verarbeitung der Aufgabe in einem anderen Verarbeitungselement (122 bis 134, 222, 322 bis 334, 422 bis 434, 522 bis 550, 620 bis 640, 720a bis 742, 822 bis 842) ist, und
- Zuweisen der Aufgabe zu dem anderen Verarbeitungselement (122 bis 134, 222, 322 bis 334, 422 bis 434, 522 bis 550, 620 bis 640, 720a bis 742, 822 bis 842).

6. Verfahren nach einem der vorhergehenden Ansprüche, wobei das Verfahren überdies Folgendes umfasst:
- Bestimmen einer Schwellenwertzeit für die Verarbeitung der Aufgabe,
- Beginnen der Verarbeitung der Aufgabe auf dem ausgewählten Verarbeitungselement (122 bis 134, 222, 322 bis 334, 422 bis 434, 522 bis 550, 620 bis 640, 720a bis 742, 822 bis 842),
- Überprüfen, ob die tatsächliche Verarbeitungszeit für die Aufgabe länger als die Schwellenwertzeit ist,
- Abbrechen der Verarbeitung der Aufgabe, wenn die tatsächliche Verarbeitungszeit länger als die Schwellenwertzeit ist,
- Zuweisen der Aufgabe zu einem anderen Verarbeitungselement (122 bis 134, 222, 322 bis 334, 422 bis 434, 522 bis 550, 620 bis 640, 720a bis 742, 822 bis 842).

7. Vorrichtung, umfassend:
- einen oder mehrere Busse (112, 114, 212, 214, 312, 314, 412, 512, 514, 612, 614, 712a, 712b, 712c, 812, 814),
- ein oder mehrere Steuerelemente (120, 220, 320, 420, 520a, 520b, 620, 720a, 720b) und
- eine Vielzahl von Verarbeitungselementen (122 bis 134, 222, 322 bis 334, 422 bis 434, 522 bis 550, 620 bis 640, 720a bis 742, 822 bis 842), wobei für das mindestens eine Verarbeitungselement (122 bis 134, 222, 322 bis 334, 422 bis 434, 522 bis 550, 620 bis 640, 720a bis 742, 822 bis 842) mindestens zwei Wege zur Kommunikation mit diesem Verarbeitungselement (122 bis 134, 222, 322 bis 334, 422 bis 434, 522 bis 550, 620 bis 640, 720a bis 742, 822 bis 842) vorhanden sind und wobei mindestens eines der Steuerelemente (120, 220, 320, 420, 520a, 520b, 620, 720a, 720b) eingerichtet ist, basierend auf Folgendem einen Verteilungsweg für eine Aufgabe festzulegen:
- Identifizieren von einem oder mehreren Verarbeitungselementen (122 bis 134, 222, 322 bis 334, 422 bis 434, 522 bis 550, 620 bis 640, 720a bis 742, 822 bis 842) aus der Vielzahl von Verarbeitungselementen, die in der Lage sind, die Aufgabe zu verarbeiten, **gekennzeichnet durch**
- Identifizieren von mindestens zwei Wegen zur Kommunikation mit dem einen oder den mehreren identifizierten Verarbeitungselementen (122 bis 134, 222, 322 bis 334, 422 bis 434, 522 bis 550, 620 bis 640, 720a bis 742, 822 bis 842),
- Vorhersagen einer Taktlänge für ein oder mehrere von den identifizierten Verarbeitungselementen (122 bis 134, 222, 322 bis 334, 422 bis 434, 522 bis 550, 620 bis 640, 720a bis 742, 822 bis 842) und die identifizierten mindestens zwei Wege,
- Auswählen eines bevorzugten Verarbeitungselements (122 bis 134, 222, 322 bis 334, 422 bis 434, 522 bis 550, 620 bis 640, 720a bis 742, 822 bis 842) von den identifizierten Verarbeitungselementen und Auswählen eines bevorzugten Wegs von den identifizierten mindestens zwei Wegen, wobei die Auswahl des bevorzugten Verarbeitungselements (122 bis 134, 222, 322 bis 334, 422 bis 434, 522 bis 550, 620 bis 640, 720a bis 742, 822 bis 842) und die Auswahl der bevorzugten Wege auf der Vorhersage der Taktlänge basieren.

8. Vorrichtung nach Anspruch 7, wobei mindestens eines der Steuerelemente (120, 220, 320, 420, 520a, 520b, 620, 720a, 720b) eingerichtet ist, die Taktlänge basierend auf Folgendem vorherzusagen:
- einer vorhergesagten Vorwärtsübertragungszeit zum Übertragen eines Befehls und Eingangsdaten an das Verarbeitungselement (122 bis 134, 222, 322 bis 334, 422 bis 434, 522 bis 550, 620 bis 640, 720a bis 742, 822 bis 842),
- einer vorhergesagten Rückübertragungszeit zum Übertragen von Ausgangsdaten von dem Verarbeitungselement (122 bis 134, 222, 322 bis 334, 422 bis 434, 522 bis 550, 620 bis 640, 720a bis 742, 822 bis 842) und/oder
- einer vorhergesagten Verarbeitungszeit für die Verarbeitung der Aufgabe in einem Verarbeitungselement (122 bis 134, 222, 322 bis 334, 422 bis 434, 522 bis 550, 620 bis 640, 720a bis 742, 822 bis 842).

9. Vorrichtung nach Anspruch 7 oder 8, wobei mindestens eines der Steuerelemente (120, 220, 320, 420, 520a, 520b, 620, 720a, 720b) eingerichtet ist, die folgenden Schritte durchzuführen:
- Beginnen der Ausführung der Aufgabe auf dem ausgewählten Verarbeitungselement (122 bis 134, 222, 322 bis 334, 422 bis 434, 522 bis 550, 620 bis 640, 720a bis 742, 822 bis 842),
- Aktualisieren der vorhergesagten Taktlänge der Aufgabe, um eine vorhergesagte verbleibende Taktlänge der Aufgabe zu erhalten,
- Abbrechen der Verarbeitung der Aufgabe auf dem ausgewählten Verarbeitungselement (122 bis 134, 222, 322 bis 334, 422 bis 434, 522 bis 550, 620 bis 640, 720a bis 742, 822 bis 842), wenn bestimmt wird, dass die vorhergesagte verbleibende Taktlänge länger als eine vorhergesagte Taktlänge für die Verarbeitung der Aufgabe in einem anderen Verarbeitungselement (122 bis 134, 222, 322 bis 334, 422 bis 434, 522 bis 550, 620 bis 640, 720a bis 742, 822 bis 842) ist, und
- erneutes Zuweisen der Aufgabe zu dem anderen Verarbeitungselement (122 bis 134, 222, 322 bis 334, 422 bis 434, 522 bis 550, 620 bis 640, 720a bis 742, 822 bis 842).

10. Vorrichtung nach einem der Ansprüche 7 bis 9, wobei sie überdies eine oder mehrere Belegt-Tabellen umfasst, die Informationen über die Fähigkeiten und/oder gegenwärtige Verfügbarkeit und/oder Nutzung der Vielzahl von Verarbeitungselementen (122 bis 134, 222, 322 bis 334, 422 bis 434, 522 bis 550, 620 bis 640, 720a bis 742, 822 bis 842) umfasst, wobei mindestens eines der Steuerelemente (120, 220, 320, 420, 520a, 520b, 620, 720a, 720b) eingerichtet ist, die Informationen in der einen oder den mehreren Belegt-Tabellen regelmäßig zu aktualisieren.

11. Vorrichtung nach einem der Ansprüche 7 bis 10, wobei der eine oder die mehreren Busse (112, 114, 212, 214, 312, 314, 412, 512, 514) einen oder mehrere Ringe umfassen.

12. Vorrichtung nach einem der Ansprüche 7 bis 11, wobei der eine oder die mehreren Busse (112, 114, 212, 214, 312, 314, 412, 512, 514, 612, 614, 712a, 712b, 712c, 812, 814) eine erste Menge von Bussen zum Transportieren von Befehlen und eine zweite Menge von Bussen zum Transportieren von Daten umfassen.

13. Vorrichtung nach einem der Ansprüche 7 bis 12, wobei der eine oder die mehreren Busse (112, 114, 212, 214, 312, 314) zwei Ringe (112, 114, 212, 214, 312, 314) umfassen, die unidirektional und in entgegengesetzte Richtungen ausgerichtet sind.

14. Vorrichtung nach einem der Ansprüche 7 bis 13, wobei der eine oder die mehreren Busse (112, 114, 212, 214, 312, 314, 412, 512, 514) einen Element Interconnect Bus umfassen.

15. Vorrichtung nach einem der Ansprüche 7 bis 14, wobei mindestens eines von der Vielzahl von Elementen (220, 222) mit dem einen oder den mehreren Bussen (212, 214) verbunden ist und zusätzlich eine direkte Verbindung (221) zu mindestens einem anderen Element (212, 214) umfasst.

16. Vorrichtung nach einem der Ansprüche 7 bis 15, überdies umfassend ein Vorhersagemodul das ausgestaltet ist, zukünftige Aufgaben basierend auf vorhergehend verarbeiteten Aufgaben vorherzusagen.

17. Vorrichtung nach Anspruch 16, wobei die Vorrichtung eingerichtet ist, eine oder mehrere vorhergesagte zukünftige Aufgaben zugunsten der Ausführung gegenwärtiger Aufgaben abzubrechen, wenn eine oder mehrere neue Aufgaben nach dem Beginn der Ausführung von einer oder mehreren vorhergesagten zukünftigen Aufgaben eintreffen.

18. Vorrichtung nach einem der Ansprüche 7 bis 17, wobei der eine oder die mehreren Busse (112, 114, 212, 214, 312, 314, 412, 512, 514, 612, 614, 712a, 712b, 712c, 812, 814), das eine oder die mehreren Steuerelemente (120, 220, 320, 420, 520a, 520b, 620, 720a, 720b) und mindestens einige von der Vielzahl von Verarbeitungselementen (122 bis 134, 222, 322 bis 334, 422 bis 434, 522 bis 550, 620 bis 640, 720a bis 742, 822 bis 842) sich innerhalb desselben Chip-Gehäuses befinden.

19. Server-System, umfassend eine Vorrichtung nach mindestens einem der Ansprüche 7 bis 18.

## Revendications

1. Procédé pour décider d'un chemin de distribution d'une tâche dans un dispositif qui comprend un ou plusieurs bus (112, 114, 212, 214, 312, 314, 412, 512, 514, 612, 614, 712a, 712b, 712c, 812, 814) et une pluralité d'éléments de traitement (122-134), 222, 322-334, 422-434, 522-550, 620-640, 720a-742, 822-842), dans lequel, pour ledit au moins un élément de traitement (122-134, 222, 322-334, 422-434, 522-550, 620-640, 720a-742, 822-842), au moins deux voies de communication avec cet élément de traitement (122-134, 222, 322-334, 422-434, 522-550, 620-640), 720a-742, 822-842) sont disponibles, le procédé comprenant les étapes consistant à :
- identifier un ou plusieurs éléments de traitement (122-134, 222, 322-334, 422-434, 522-550, 620-640, 720a-742, 822-842) parmi la pluralité d'éléments de traitement qui sont aptes à traiter la tâche, **caractérisé par**
- le fait d'identifier au moins deux voies pour communiquer avec ledit un ou plusieurs éléments de traitement identifiés (122-134, 222, 322-334, 422-434, 522-550, 620-640, 720a-742, 822-842),
- le fait de prédire une longueur de cycle pour un ou plusieurs des éléments de traitement identifiés (122-134, 222, 322-334, 422-434, 522-550, 620-640, 720a-742, 822-842) et lesdites au moins deux voies identifiées,
- le fait de sélectionner un élément de traitement préféré parmi les éléments de traitement identifiés (122-134, 222, 322-334, 422-434, 522-550, 620-640, 720a-742, 822-842) et de sélectionner un chemin préféré parmi lesdites au moins deux voies identifiées, la sélection de l'élément de traitement préféré (122-134, 222, 322-334, 422-434, 522-550, 620-640, 720a-742, 822-842) et la sélection des voies préférées étant basée sur le prédiction de la longueur du cycle.

2. Le procédé selon la revendication 1, dans lequel la longueur de cycle pour un élément de traitement identifié (122-134, 222, 322-334, 422-434, 522-550, 620-640, 720a-742, 822-842) et un chemin identifié est prédit sur la base
- d'un temps de transfert d'aller prévu pour transférer une instruction et des données d'entrée à l'élément de traitement identifié (122-134, 222, 322-334, 422-434, 522-550, 620-640, 720a-742, 822-842) sur la voie identifiée,
- d'un temps de transfert retour prévu pour transférer des données de sortie depuis l'élément de traitement identifié (122-134, 222, 322-334, 422-434, 522-550, 620-640, 720a-742, 822-842) sur la voie identifiée, et / ou
- d'une durée de traitement prévue pour traiter la tâche sur l'élément de traitement identifié (122-134, 222, 322-334, 422-434, 522-550, 620-640, 720a-742, 822-842).

3. Le procédé selon la revendication 2, dans lequel la longueur de cycle prévue est la somme du temps de transfert aller prévu, du temps de transfert retour prévu et du temps de traitement prévu.

4. Le procédé selon l'une des revendications précédentes, dans lequel le fait de prédire la longueur du cycle est basé sur au moins l'une parmi
- la disponibilité et / ou de l'utilisation en cours du ou des bus (112, 114, 212, 214, 312, 314, 412, 512, 514, 612, 614, 712a, 712b, 712c, 812, 814), et
- la disponibilité et / ou l'utilisation en cours du ou des éléments de traitement identifiés (122-134, 222, 322-334, 422-434, 522-550, 620-640, 720a-742, 822-842).

5. Le procédé selon l'une des revendications précédentes, dans lequel le procédé comprend en outre :
- le fait de débuter le traitement de la tâche sur l'élément de traitement sélectionné (122-134, 222, 322-334, 422-434, 522-550, 620-640, 720a-742, 822-842),
- le fait d'actualiser la longueur de cycle prévue de la tâche pour obtenir une longueur de cycle restante prévue de la tâche,
- le fait d'annuler le traitement de la tâche sur l'élément de traitement sélectionné (122-134, 222, 322-334, 422-434, 522-550, 620-640, 720a-742, 822-842) s'il est déterminé que la longueur de cycle restante prévue est supérieure à une longueur de cycle prévue pour traiter la tâche dans un élément de traitement différent (122-134, 222, 322-334, 422-434, 522-550, 620-640, 720a-742, 822-842), et
- le fait d'attribuer la tâche audit élément de traitement différent (122-134, 222, 322-334, 422-434, 522-550, 620-640, 720a-742, 822-842).

6. Le procédé selon l'une des revendications précédentes, dans lequel le procédé comprend en outre :
- le fait de déterminer un temps limite pour le traitement de la tâche,
- le fait de débuter le traitement de la tâche sur l'élément de traitement sélectionné (122-134, 222, 322-334, 422-434, 522-550, 620-640, 720a-742, 822-842),
- le fait de vérifier si le temps de traitement réel de la tâche est supérieur au temps limite,
- le fait d'annuler le traitement de la tâche si le temps de traitement réel est supérieur au temps limite,
- le fait d'attribuer la tâche à un élément de traitement différent (122-134, 222, 322-334, 422-434, 522-550, 620-640, 720a-742, 822-842).

7. Un dispositif comprenant
- un ou plusieurs bus (112, 114, 212, 214, 312, 314, 412, 512, 514, 612, 614, 712a, 712b, 712c, 812, 814),
- un ou plusieurs éléments de commande (120, 220, 320, 420, 520a, 520b, 620, 720a, 720b), et
- une pluralité d'éléments de traitement (122-134, 222, 322-334, 422-434, 522-550, 620-640, 720a-742, 822-842),
dans lequel, pour ledit au moins un élément de traitement (122-134, 222, 322-334, 422-434, 522-550, 620-640, 720a-742, 822-842), au moins deux voies pour communiquer avec cet élément de traitement (122-134, 222, 322-334, 422-434, 522-550, 620-640, 720a-742, 822-842) sont disponibles et dans lequel au moins l'un des éléments de commande (120, 220, 320, 420, 520a, 520b, 620, 720a, 720b) est adapté pour décider sur un chemin de distribution pour une tâche, sur la base :
- du fait d'identifier un ou plusieurs éléments de traitement (122-134, 222, 322-334, 422-434, 522-550, 620-640, 720a-742, 822-842) parmi la pluralité d'éléments de traitement qui sont aptes à traiter la tâche, **caractérisé par**
- le fait d'identifier au moins deux voies pour communiquer avec ledit un plusieurs éléments de traitement identifiés (122-134, 222, 322-334, 422-434, 522-550, 620-640, 720a-742, 822-842),
- le fait de prédire une longueur de cycle pour un ou plusieurs des éléments de traitement identifiés (122-134, 222, 322-334, 422-434, 522-550, 620-640, 720a-742, 822-842) et desdits au moins deux voies identifiées,
- le fait de sélectionner un élément de traitement préféré (122-134, 222, 322-334, 422-434, 522-550, 620-640, 720a-742, 822-842) parmi les éléments de traitement identifiés et de sélectionner une voie préférée parmi lesdites au moins deux voies identifiées, la sélection de l'élément de traitement préféré (122-134, 222, 322-334, 422-434, 522-550, 620-640, 720a-742, 822-842) et la sélection des voies préférées étant basée sur le prédiction de la longueur du cycle.

8. Le dispositif selon la revendication 7, dans lequel au moins l'un des éléments de commande (120, 220, 320, 420, 520a, 520b, 620, 720a, 720b) est adapté pour prédire la longueur de cycle sur la base
- d'un temps de transfert aller prévu pour transférer une instruction et des données d'entrée à l'élément de traitement (122-134, 222, 322-334, 422-434, 522-550, 620-640, 720a-742, 822-842),
- d'un temps de transfert retour prévu pour transférer des données de sortie provenant de l'élément de traitement (122-134, 222, 322-334, 422-434, 522-550, 620-640, 720a-742, 822-842), et / ou
- d'une durée de traitement prévue pour traiter la tâche dans un élément de traitement (122-134, 222, 322-334, 422-434, 522-550, 620-640, 720a-742, 822-842).

9. Le dispositif selon la revendication 7 ou la revendication 8, dans lequel au moins l'un des éléments de commande (120, 220, 320, 420, 520a, 520b, 620, 720a, 720b) est adapté pour mettre en oeuvre les étapes suivantes :
- commencer l'exécution de la tâche sur l'élément de traitement sélectionné (122-134, 222, 322-334, 422-434, 522-550, 620-640, 720a-742, 822-842),
- actualiser la longueur de cycle prévue de la tâche pour obtenir une longueur de cycle restante prévue de la tâche,
- annuler le traitement de la tâche sur l'élément de traitement sélectionné (122-134, 222, 322-334, 422-434, 522-550, 620-640, 720a-742, 822-842) s'il est déterminé que la longueur de cycle restante prévue est supérieure à une longueur de cycle prévue pour traiter la tâche dans un élément de traitement différent (122-134, 222, 322-334, 422-434, 522-550, 620-640, 720a-742, 822-842), et
- réassigner la tâche audit élément de traitement différent (122-134, 222, 322-334, 422-434, 522-550, 620-640, 720a-742, 822-842).

10. Le dispositif selon l'une des revendications 7 à 9, **caractérisé en ce qu'**il comprend en outre une ou plusieurs tables d'occupation comportant des informations sur les capacités et / ou la disponibilité et / ou l'utilisation en cours de la pluralité d'éléments de traitement (122-134, 222, 322-334, 422-434, 522-550, 620-640, 720a-742, 822-842), au moins l'un des éléments de commande (120, 220, 320, 420, 520a, 520b, 620, 720a, 720b) est adapté pour mettre à jour régulièrement les informations dans la ou les tables d'occupation.

11. Le dispositif selon l'une des revendications 7 à 10, dans lequel le ou les bus (112, 114, 212, 214, 312, 314, 412, 512, 514) comprennent une ou plusieurs boucles.

12. Le dispositif selon l'une des revendications 7 à 11, dans lequel lesdits un ou plusieurs bus (112, 114, 212, 214, 314, 314, 412, 512, 514, 612, 614, 712b, 712c, 812, 814) comprennent un premier ensemble de bus pour transporter des instructions et un deuxième ensemble de bus pour transporter des données.

13. Le dispositif selon l'une des revendications 7 à 12, dans lequel le ou les bus (112, 114, 212, 214, 312, 314) comprennent deux boucles (112, 114, 212, 214, 312, 314) qui sont unidirectionnelles et orientées dans des directions opposées.

14. Le dispositif selon l'une des revendications 7 à 13, dans lequel le ou les bus (112, 114, 212, 214, 312, 314, 412, 512, 514) comprennent un Bus d'Interconnexion d'Eléments.

15. Le dispositif selon l'une des revendications 7 à 14, dans lequel au moins un élément faisant partie de la pluralité d'éléments (220, 222) est connecté audit un ou plusieurs bus (212, 214) et comprend en outre une connexion directe (221) à au moins un autre élément (212, 214).

16. Le dispositif selon l'une des revendications 7 à 15, comprenant en outre un module de prédiction qui est configuré pour prévoir des tâches futures sur la base de tâches précédemment traitées.

17. Le dispositif selon la revendication 16, dans lequel le dispositif est adapté pour annuler une ou plusieurs tâches futures prévues en faveur de l'exécution des tâches en cours si une ou plusieurs nouvelles tâches arrivent après qu'ait été commencée l'exécution d'une ou plusieurs tâches futures prévues.

18. Le dispositif selon l'une des revendications 7 à 17, dans lequel le ou les bus (112, 114, 212, 214, 314, 314, 412, 512, 514, 612, 614, 712a, 712b, 712c, 812, 814), le ou les éléments de commande (120, 220, 320, 420, 520a, 520b, 620, 720a, 720b) et au moins certains éléments faisant partie de la pluralité d'éléments de traitement (122-134, 222, 322-334, 422-434, 522-550, 620-640, 720a-742, 822-842) sont situés dans le même boîtier de puce.

19. Système de serveur comprenant un dispositif selon l'une au moins des revendications 7 à 18.
